# FASCICULE DE BREVET EUROPEEN

(11) **EP 2 897 825 B1**
(45) Date de publication et mention de la délivrance du brevet: **23.05.2018**
(21) Numéro de dépôt: 13747470.6
(22) Date de dépôt: 22.07.2013
(51) Int. Cl.: B60H 3/02, F24F 6/12, F24F 6/14

(54) **DISPOSITIF DE NÉBULISATION COMPACT POUR UN DISPOSITIF DE TRAITEMENT D'AIR**
KOMPAKTER VERNEBLER FÜR EINE LUFTBEHANDLUNGSVORRICHTUNG
COMPACT NEBULIZER DEVICE FOR AN AIR TREATMENT DEVICE

(30) Priorité: 24.09.2012 FR 1258937
(43) Date de publication de la demande: 29.07.2015
(73) Titulaire: PSA Automobiles SA, 78300 Poissy (FR)
(72) Inventeur: KERVAREC, Florian, F-91310 Longpont Sur Orge (FR); PINTAT, Bruno, F-92140 Clamart (FR); DUMUR, Denis, F-78990 Elancourt (FR); POT, Vincent, F-75013 Paris (FR)
(86) Numéro de dépôt international: PCT/FR2013/051755
(87) Numéro de publication internationale: WO 2014/044935

(56) Documents cités:
- WO-A1-2008/050878
- DE-U1- 8 534 506
- DE-U1- 20 213 349

## Description

L'invention concerne les dispositifs de nébulisation.

On entend ici par « dispositif de nébulisation » un équipement aspirant un liquide afin de produire de très petites gouttes (sous la forme d'un brouillard) qui sont destinées à être mélangées à un flux d'air pour augmenter son hygrométrie et ainsi lui permettre de rafraîchir une enceinte, comme par exemple un habitacle de véhicule (éventuellement de type automobile) ou une pièce ou salle d'un bâtiment.

Plusieurs solutions ont déjà été proposées pour rafraîchir un flux d'air devant alimenter une enceinte. Par exemple, lorsque l'enceinte est une partie arrière d'un habitacle de véhicule, on peut utiliser une ventilation réfrigérée par nébulisation avec un relais via l'installation de climatisation principale de ce véhicule, ou une ventilation réfrigérée par nébulisation avec un relais via un pulseur d'air relais.

Ces solutions s'avèrent assez encombrantes, en particulier lorsqu'elles réunissent dans un même espace, par exemple dans une console centrale installée entre les sièges avant d'un véhicule, un réservoir de liquide, une chambre de nébulisation, un pulseur et un conduit chargé d'alimenter en air pulsé et traité (rafraichi) des bouches de diffusion. En outre, dans le cas de l'installation précitée, les bouches de diffusion se trouvent assez éloignées des visages des passagers arrière, ce qui n'est pas optimal. Il serait préférable en effet de délivrer l'air rafraichi à une moindre distance (typiquement entre 200 mm et 600 mm) pour que la nébulisation améliore plus efficacement le confort aérothermique des passagers arrière.

Il est connu du document DE8534506U1, un dispositif de nébulisation conforme au préambule de la revendication 1.

L'invention a donc pour but d'améliorer l'efficacité du dispositif de nébulisation tout en permettant un dispositif compact.

Elle propose à cet effet un dispositif de nébulisation conforme à la partie caractérisante de la revendication 1.

On obtient ainsi un dispositif de nébulisation compact qui peut être plus facilement installé dans une enceinte, et notamment ailleurs que dans une console centrale placée entre les sièges avant d'un véhicule, comme par exemple dans un pavillon (ou toit) de véhicule.

Le dispositif de nébulisation selon l'invention peut comporter d'autres caractéristiques qui peuvent être prises séparément ou en combinaison, et notamment :
- chaque moyen de nébulisation peut être agencé pour produire des gouttes par effet piézoélectrique ;
- le nombre N peut être égal au nombre M, afin que chacun des N moyens de nébulisation soit associé à l'une des M sorties de l'enceinte ;
- chacune des P entrées secondaires d'une chambre peut être associée à l'une des M sorties de l'enceinte ;
- chacune des P entrées secondaires d'une chambre peut être agencée sous la forme d'un conduit qui est défini dans une paroi délimitant partiellement cette chambre ;
- les chambres peuvent être définies dans un élément monobloc ;
- il peut comprendre au moins un ventilateur couplé à l'enceinte et propre à alimenter cette dernière en air d'alimentation ;
- il peut comprendre une pompe propre à alimenter en liquide l'enceinte.

L'invention propose également un dispositif de traitement d'air comprenant un pulseur propre à fournir au moins un flux d'air pulsé à traiter sur au moins une sortie, un dispositif de nébulisation du type de celui présenté ci-avant et couplé à chaque sortie du pulseur, et des bouches de diffusion couplées respectivement aux chambres du dispositif de nébulisation afin de délivrer en des endroits choisis chaque flux d'air pulsé et traité issu de l'une des chambres.

L'invention propose également un véhicule comprenant au moins un dispositif de traitement d'air du type de celui présenté ci-avant.

Un tel véhicule peut, par exemple, comprendre un pavillon (ou toit) comportant au moins le pulseur, le dispositif de nébulisation et les bouches de diffusion du dispositif de traitement d'air.

D'autres caractéristiques et avantages de l'invention apparaîtront à l'examen de la description détaillée ci-après, et des dessins annexés (obtenus en CAO/DAO, d'où le caractère apparemment discontinu de certaines lignes et les niveaux de gris), sur lesquels :
- la figure 1 illustre schématiquement, dans une vue en perspective, un exemple de réalisation d'un dispositif de traitement d'air selon l'invention,
- la figure 2 illustre schématiquement, dans une vue en perspective, l'enceinte et les moyens de nébulisation du dispositif de nébulisation faisant partie du dispositif de traitement d'air de la figure 1, et
- la figure 3 illustre schématiquement, dans une vue en perspective, le dispositif de nébulisation de la figure 1.

L'invention a notamment pour but de proposer un dispositif de nébulisation DN destiné à fournir des gouttes de très petites dimensions devant être mélangées à au moins un flux d'air pulsé destiné à alimenter une enceinte.

Dans ce qui suit, on considère, à titre d'exemple non limitatif, que l'enceinte est un habitacle de véhicule automobile, comme par exemple une voiture. Mais l'invention n'est pas limitée à ce type d'enceinte. Elle concerne en effet tout type d'enceinte, et notamment les habitacles de véhicule, quel qu'en soit le type, les pièces ou salles de bâtiments, et les vérandas.

Par ailleurs, on considère dans ce qui suit, à titre d'exemple non limitatif, que le dispositif de nébulisation DN fait partie d'un dispositif de traitement d'air DT qui est par exemple destiné à être implanté au moins partiellement dans une console d'un pavillon (ou toit) de véhicule, afin de participer au confort thermique des passagers arrière de ce véhicule. Mais l'invention n'est pas limitée à ce type d'implantation. Ainsi, un dispositif de traitement d'air DT peut être également implanté dans une console centrale installée entre deux sièges d'un véhicule, ou dans un compartiment moteur ou une planche de bord ou un siège ou encore un coffre de véhicule, ou encore dans un mur ou un faux plafond d'un bâtiment, par exemple.

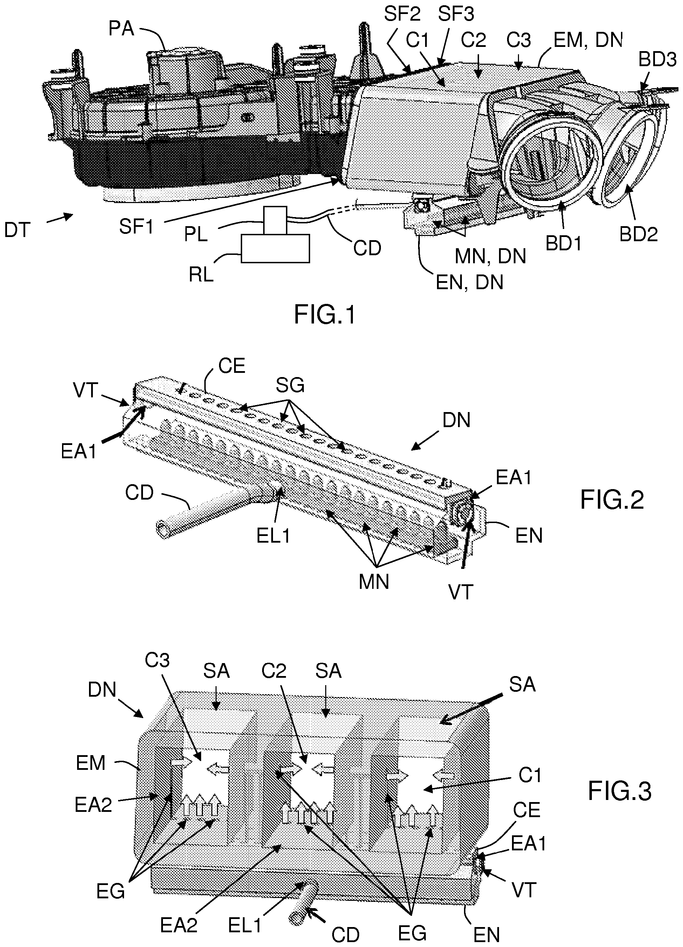

On a schématiquement représenté sur la figure 1 un exemple de réalisation d'un dispositif de traitement d'air DT selon l'invention. Comme illustré, un dispositif de traitement d'air DT comprend au moins un pulseur PA, un dispositif de nébulisation DN et des bouches de diffusion BDk.

Le pulseur PA est chargé d'aspirer de l'air (ici issu de l'intérieur de l'habitacle) pour fournir au moins un flux d'air pulsé à traiter sur au moins une sortie SFj. Dans l'exemple non limitatif illustré, le pulseur PA comprend trois sorties SF1 à SF3 (j = 1 à 3). Mais il pourrait n'en comporter qu'une seule ou bien en comporter deux ou plus de trois (par exemple quatre ou cinq).

Le pulseur d'air PA est alimenté électriquement (ici par le réseau électrique du véhicule), éventuellement à régime variable, et propre à prélever de l'air dans l'enceinte (ici dans l'habitacle d'un véhicule).

Le dispositif de nébulisation DN est couplé à chaque sortie SFj du pulseur PA. Il est chargé de traiter dans des chambres Ci chaque flux d'air pulsé fourni par une sortie SFj du pulseur PA afin de délivrer des flux d'air pulsé et traité. Il sera décrit plus loin en détail.

Les bouches de diffusion BDk sont couplées aux chambres Ci du dispositif de nébulisation DN, afin de délivrer en des endroits choisis (ici de l'habitacle d'un véhicule) les flux d'air pulsé et traité qui sont issus de ces chambres Ci.

On notera que dans l'exemple non limitatif illustré, le dispositif de nébulisation DN comprend trois chambres de traitement d'air C1 à C3 (i = 1 à 3) couplées respectivement à trois bouches de diffusion BD1 à BD3 (k = 1 à 3). Mais le nombre de bouches de diffusion BDk n'est pas forcément égal au nombre de chambres Ci. Le nombre de bouches de diffusion BDk pourrait en effet être supérieur ou inférieur au nombre de chambres Ci.

On a schématiquement représenté sur les figures 2 et 3 un exemple de réalisation d'un dispositif de nébulisation DN selon l'invention. Comme illustré, un dispositif de nébulisation D comprend au moins une enceinte EN, N moyens de nébulisation MN et au moins deux chambres Ci.

L'enceinte EN se présente sous la forme d'un boîtier comprenant un logement interne agencé de manière à recevoir les N moyens de nébulisation MN et du liquide. Ce boîtier d'enceinte EN est muni d'une entrée principale EL propre à l'alimenter en liquide, d'au moins une entrée secondaire EA1 propre à l'alimenter en air, et de M sorties SG, avec M > 1.

Dans l'exemple non limitatif illustré sur les figures 1 à 3, le liquide provient d'une pompe PL qui est située à l'extérieur de l'enceinte EN et qui est couplée à un réservoir de liquide RL externe. Ce liquide peut, par exemple, être de l'eau. On notera que cette eau peut être éventuellement déminéralisée, ou additionnée de produit(s) chimique(s), comme par exemple un désinfectant.

L'alimentation en liquide de l'enceinte EN se fait via un conduit CD dont les extrémités opposées sont solidarisées respectivement à la sortie de la pompe PL et à l'entrée principale EL. Mais dans une variante de réalisation, le boîtier d'enceinte EN pourrait comporter un compartiment définissant un réservoir de liquide, et la pompe pourrait être installée dans le boîtier d'enceinte EN.

Par ailleurs, dans l'exemple non limitatif illustré sur la figure 2, l'enceinte EN est munie de deux entrées secondaires EA1, sensiblement opposées de manière à permettre l'entrée de deux petits flux d'air de sens opposés, et de 20 sorties SG (M = 20). Mais l'enceinte EN pourrait ne comprendre qu'une unique entrée secondaire EA1 et/ou un nombre de sorties SG différent de 20 (dès lors qu'il est supérieur ou égal à 2).

Par exemple, et comme illustré non limitativement, chaque petit flux d'air peut être fourni par un ventilateur VT de dimensions très réduites (typiquement quelques centimètres cube (cm³)). Dans l'exemple non limitatif illustré sur la figure 2, les deux ventilateurs VT sont fixés sur l'enceinte EN au niveau respectivement de ses deux entrées secondaires EA1. Mais cela n'est pas obligatoire. En effet, les ventilateurs VT pourraient être déportés et couplés aux entrées secondaires EA1 par des conduits.

Chaque ventilateur VT est alimenté électriquement (ici par le réseau électrique du véhicule), éventuellement à régime variable, et propre à prélever de l'air dans l'enceinte (ici dans l'habitacle d'un véhicule).

Le nombre N de moyens de nébulisation MN est supérieur ou égal à 1 (N ≥ 1). Mais de préférence, et comme illustré non limitativement sur les figures 1 à 3, ce nombre N est largement supérieur à un (1). On notera que dans l'exemple illustré le nombre N est égal au nombre M, afin que chacun des N moyens de nébulisation MN soit associé à l'une des M sorties SG de l'enceinte EN. Mais cela n'est pas obligatoire. En effet, chaque sortie SG pourrait être associée à plusieurs moyens de nébulisation MN, ou bien chaque moyen de nébulisation MN pourrait être associé à plusieurs sorties SG.

Chaque moyen de nébulisation MN est immergé dans le liquide qui est contenu dans l'enceinte EN et agencé de manière à produire des gouttes très petites (sous la forme d'un «brouillard» ou d'une «brume») à partir de ce liquide, afin de les délivrer sur l'une au moins des sorties SG grâce à un entraînement par l'air d'alimentation provenant des entrées secondaires EA1.

Typiquement, ces gouttes présentent un diamètre compris entre environ 2 µm et environ 5 µm.

Toute technique de nébulisation miniaturisée et connue de l'homme de l'art peut être ici utilisée. A titre d'exemple, il peut s'agir d'une technique par effet piézoélectrique, bien connue de l'homme de l'art. Dans ce cas, chaque moyen de nébulisation MN peut, par exemple, comprendre un oscillateur piézoélectrique miniaturisé, couplé à une mini chambre de nébulisation et vibrant à très haute fréquence lorsqu'il est alimenté en tension (ici par le réseau électrique du véhicule). Par exemple, dans le cas d'un nébuliseur ultrasonique, la surface vibrante est actionnée par des ultrasons (c'est-à-dire selon une fréquence supérieure à 20000 Hz). Cet oscillateur piézoélectrique est immergé dans le liquide à nébuliser afin de générer à la surface de ce le liquide une brume ou un brouillard composé(e) de gouttelettes de dimensions microscopiques qui sont entraînées par un petit flux d'air d'alimentation vers la/les sorties SG associées au moyen de nébulisation MN dont il fait partie.

On notera qu'afin d'éviter un endommagement des oscillateurs piézoélectriques, il est préférable de maintenir dans l'enceinte EN un niveau de liquide supérieur à un seuil choisi. A cet effet, l'enceinte EN peut comporter des moyens de détection (non représentés) propres à estimer le niveau du liquide qu'il contient. Ces moyens de détection peuvent être éventuellement agencés pour contrôler le fonctionnement de la pompe PE et pour interdire le fonctionnement des oscillateurs piézoélectriques lorsque le niveau de liquide estimé est inférieur ou égal au seuil choisi.

La hauteur de la chambre de nébulisation, qui est associée à un oscillateur piézoélectrique, est choisie de manière à permettre la formation de la nébulisation.

L'alimentation en courant des oscillateurs piézoélectriques se fait via un câble électrique étanche (non représenté) qui traverse à étanchéité une paroi de l'enceinte EN et qui est connecté (ici) au réseau électrique du véhicule.

Par exemple, et comme illustré non limitativement sur la figure 2, les sorties SG sont définies dans un couvercle CE qui est destiné à obturer à étanchéité une face ouverte de l'enceinte EN. Cette face ouverte est prévue avantageusement de manière à permettre l'introduction des moyens de nébulisation MN à l'intérieur de l'enceinte EN. On notera que pour faciliter cette introduction, il est avantageux que les moyens de nébulisation MN soient solidarisés les uns aux autres en définissant une espèce de barrette.

Chaque chambre Ci est munie d'une entrée principale EA2, de P entrées secondaires EG, avec P ≥ 1, et d'une sortie SA.

L'entrée principale EA2 de chaque chambre Ci est propre à être alimentée en flux d'air pulsé à traiter provenant d'une sortie SFj associée du pulseur PA.

Chaque entrée secondaire EG de chaque chambre Ci est alimentée en gouttes par l'une au moins des sorties SG de l'enceinte EN et propre à transférer ces gouttes dans le flux d'air pulsé (qui alimente sa chambre Ci) afin de le traiter.

On notera, comme illustré non limitativement sur la figure 3, que chaque entrée secondaire EG d'une chambre Ci peut être associée à l'une des M sorties SG de l'enceinte EN. Mais cela n'est pas obligatoire. En effet, au moins une entrée secondaire EG pourrait être associée à plusieurs sorties SG, ou bien au moins une sortie SG pourrait être associée à plusieurs entrées secondaires EG.

On notera également que chacune des P entrées secondaires EG d'une chambre Ci peut être agencée sous la forme d'un conduit qui est défini dans la masse d'une paroi qui délimite partiellement cette chambre Ci. Ces conduits peuvent être définis dans des parois différentes de manière à permettre des injections de gouttes à des niveaux différents (matérialisés par les flèches pleines sur la figure 3).

La sortie SA de chaque chambre Ci est propre à délivrer le flux d'air pulsé qui a été traité par adjonction de gouttes dans sa chambre Ci.

Comme indiqué plus haut, dans l'exemple non limitatif illustré sur les figures 1 et 3, le dispositif de nébulisation DN comprend trois chambres C1 à C3 (i = 1 à 3) couplées respectivement aux trois bouches de diffusion BD1 à BD3 du dispositif de traitement DT, de manière à individualiser les flux d'air pulsé et traité qui alimentent respectivement ces bouches de diffusion BD1 à BD3. Mais le nombre de chambres Ci peut être différent du nombre de bouches de diffusion BDk. Ce qui est important c'est que ce nombre soit supérieur ou égal à deux, de sorte qu'en cas de dysfonctionnement de moyens de nébulisation MN associés à une chambre Ci et donc empêchant le traitement du flux d'air pulsé dans cette dernière (Ci), la/les autres chambres Ci' (i' ≠ i) puissent continuer de traiter leurs propres flux d'air pulsé.

On notera, comme illustré non limitativement sur la figure 3, que les chambres Ci peuvent être définies dans un élément monobloc EM. Mais cela n'est pas obligatoire. En effet, chaque chambre Ci pourrait être définie dans un élément, et les différents éléments pourraient être solidarisés les uns aux autres.

Cet élément monobloc EM peut comprendre un logement destiné à recevoir étroitement et à étanchéité une partie du couvercle CE de l'enceinte EN, de sorte que les sorties SG soient placées (quasiment) contre les entrées secondaires EG.

On notera également que dans l'exemple non limitatif illustré sur la figure 1, l'élément monobloc EM est une pièce qui est rapportée entre les sorties SFj du pulseur PA et les bouches de diffusion BDk. Mais cela n'est pas obligatoire. En effet, l'élément monobloc EM pourrait faire partie intégrante du pulseur PA et/ou les bouches de diffusion BDk pourraient faire partie intégrante de l'élément monobloc EM.

L'invention offre plusieurs avantages, parmi lesquels :
- une meilleure évaporation de l'eau du fait qu'elle se fait entièrement dans un flux d'air pulsé,
- une amélioration de la fiabilité d'ensemble du fait que si un moyen de nébulisation tombe en panne, les autres continuent de produire des gouttes et donc vont permettre un fonctionnement en mode dégradé,
- une réduction de la consommation de carburant lorsque le dispositif de traitement d'air remplace une installation de climatisation, ou bien une optimisation du compromis entre le confort thermique de l'enceinte et l'autonomie en kilomètres,
- une implantation facilitée du fait de la grande compacité offerte, ce qui permet en outre de rendre plus facile la conception de l'architecture du système dans lequel elle est implantée (notamment du fait de l'absence de conduit de liaison avec la boucle froide principale de l'installation de climatisation ou d'un climatiseur additionnel).

## Revendications

1. Dispositif de nébulisation (DN), comprenant i) une enceinte (EN) munie d'une entrée principale (EL) propre à l'alimenter en liquide, d'au moins une entrée secondaire (EA1) propre à l'alimenter en air, et de M sorties (SG), avec M > 1, ii) N moyens de nébulisation (MN), avec N ≥ 1, logés dans ladite enceinte (EN) et propres chacun à produire des gouttes très petites à partir dudit liquide afin de les délivrer sur l'une au moins desdites sorties (SG) grâce à un entraînement par ledit air d'alimentation, et iii) au moins deux chambres (Ci) munies chacune d'une entrée principale (EA2) propre à être alimentée en flux d'air pulsé à traiter et en gouttes par l'une au moins des sorties de ladite enceinte (EN) et propres à transférer lesdites gouttes dans ledit flux d'air pulsé afin de le traiter, et d'une sortie propre à délivrer ledit flux d'air pulsé et traité, **caractérisé en ce que** chacune des chambres (Ci) comprend P entrées secondaires (EG), avec P ≥ 1, alimentées chacune en gouttes par l'une au moins des sorties (SG) de ladite enceinte (EN), tandis que l'entrée principale (EA2) de ces chambres (Ci) est propre à être alimentée en flux d'air pulsé à traiter.

2. Dispositif selon la revendication 1, **caractérisé en ce que** chacun desdits moyens de nébulisation (MN) est agencé pour produire des gouttes par effet piézoélectrique.

3. Dispositif selon l'une des revendications 1 et 2, **caractérisé en ce que** le nombre N est égal au nombre M, de sorte que chacun desdits N moyens de nébulisation (MN) soit associé à l'une desdites M sorties (SG) de l'enceinte (EN).

4. Dispositif selon l'une des revendications 1 à 3, **caractérisé en ce que** chacune desdites P entrées secondaires (EG) d'une chambre (Ci) est associée à l'une desdites M sorties (SG) de l'enceinte (EN).

5. Dispositif selon l'une des revendications 1 à 4, **caractérisé en ce que** chacune desdites P entrées secondaires (EG) d'une chambre (Ci) est agencée sous la forme d'un conduit défini dans une paroi délimitant partiellement cette chambre (Ci).

6. Dispositif selon l'une des revendications 1 à 5, **caractérisé en ce que** lesdites chambres (Ci) sont définies dans un élément monobloc (EM).

7. Dispositif selon l'une des revendications 1 à 6, **caractérisé en ce qu'**il comprend au moins un ventilateur (VT) couplé à ladite enceinte (EN) et propre à alimenter cette dernière (EN) en air d'alimentation.

8. Dispositif de traitement d'air (DT), **caractérisé en ce qu'**il comprend i) un pulseur (PA) propre à fournir au moins un flux d'air pulsé à traiter sur au moins une sortie (SFj), ii) un dispositif de nébulisation (DN) selon l'une des revendications précédentes et couplé à chaque sortie (SFj) dudit pulseur (PA), et iii) des bouches de diffusion (BDk) couplées respectivement auxdites chambres (Ci) du dispositif de nébulisation (DN) afin de délivrer en des endroits choisis chaque flux d'air pulsé et traité issu de l'une desdites chambres (Ci).

9. Véhicule, **caractérisé en ce qu'**il comprend au moins un dispositif de traitement d'air (DT) selon la revendication 8.

10. Véhicule selon la revendication 9, **caractérisé en ce qu'**il comprend un pavillon comportant au moins le pulseur (PA), le dispositif de nébulisation (DN) et les bouches de diffusion (BDk) dudit dispositif de traitement d'air (DT).

## Patentansprüche

1. Vernebler (DN), der i) einen Einschluss (EN) umfasst, der mit einem Haupteingang (EL) versehen ist, der geeignet ist, um mindestens einen Nebeneingang (EA1) mit Flüssigkeit zu versorgen, der geeignet ist, um mit Luft zu versorgen, und M Ausgänge (SG), wobei M > 1, ii) N Vernebler (MN), wobei N ≥ 1, die in dem Einschluss (EN) eingeschlossen sind und jeweils geeignet sind, um sehr kleine Tröpfchen ausgehend von der Flüssigkeit zu erzeugen, um sie auf mindestens einen der Ausgänge (SG) dank eines Antreibens durch die Versorgungsluft zu liefern, und iii) mindestens zwei Kammern (Ci), die jeweils mit einem Haupteingang (EA2) versehen sind der geeignet ist, um mit einem Fluss gepulster zu behandelnder Luft und Tropfen durch mindestens einen der Ausgänge des Einschlusses (EN) versorgt zu werden, und geeignet sind, um die Tropfen in dem Fluss gepulster Luft zu transferieren, um sie zu behandeln, und einen Ausgang, der geeignet ist, um den Fluss gepulster und behandelter Luft zu liefern, **dadurch gekennzeichnet, dass** jede der Kammern (Ci) P Nebeneingänge (EG) umfasst, wobei P ≥ 1, die jeweils mit Tropfen von mindestens einem der Ausgänge (SG) des Einschlusses (EN) versorgt werden, während der Haupteingang (EA2) dieser Kammern (Ci) geeignet ist, um mit dem Fluss zu behandelnder gepulster Luft versorgt zu werden.

2. Vorrichtung nach Anspruch 1, **dadurch gekennzeichnet, dass** jedes der Vernebelungsmittel (MN) eingerichtet ist, um Tropfen durch piezoelektrischen Effekt zu erzeugen.

3. Vorrichtung nach einem der Ansprüche 1 und 2, **dadurch gekennzeichnet, dass** die Anzahl N gleich der Anzahl M ist, so dass jedes der N Vernebelungsmittel (MN) mit einem der M Ausgänge (SG) des Einschlusses (EN) assoziiert ist.

4. Vorrichtung nach einem der Ansprüche 1 bis 3, **dadurch gekennzeichnet, dass** jeder der P Nebeneingänge (EG) einer Kammer (Ci) mit einem der M Ausgänge (SG) des Einschlusses (EN) assoziiert ist.

5. Vorrichtung nach einem der Ansprüche 1 bis 4, **dadurch gekennzeichnet, dass** jeder der P Nebeneingänge (EG) einer Kammer (Ci) in der Form einer Leitung eingerichtet ist, die in einer Wand definiert ist, die diese Kammer (Ci) teilweise abgrenzt.

6. Vorrichtung nach einem der Ansprüche 1 bis 5, **dadurch gekennzeichnet, dass** die Kammern (Ci) in einem einstückigen Element (EM) definiert sind.

7. Vorrichtung nach einem der Ansprüche 1 bis 6, **dadurch gekennzeichnet, dass** sie mindestens einen Ventilator (VT), der mit dem Einschluss (EN) gekoppelt und geeignet ist, diesen Letzteren (EN) mit Versorgungsluft zu versorgen, umfasst.

8. Luftbehandlungsvorrichtung (DT), **dadurch gekennzeichnet, dass** sie i) ein Gebläse (PA) umfasst, das geeignet ist, um mindestens einen gepulsten Fluss zu behandelnder Luft auf mindestens einem Ausgang (SFj) zu liefern, ii) einen Vernebler (DN) nach einem der vorhergehenden Ansprüche, und der mit jedem Ausgang (SFj) des Gebläses (PA) gekoppelt ist, und iii) Verteilungsöffnungen (BDk), die jeweils mit den Kammern (Ci) des Verneblers (DN) gekoppelt sind, um an ausgewählten Stellen jeden Fluss gepulster und behandelter Luft, der aus einer der Kammern (Ci) stammt, zu liefern.

9. Fahrzeug, **dadurch gekennzeichnet, dass** es mindestens eine Luftbehandlungsvorrichtung (DT) nach Anspruch 8 umfasst.

10. Fahrzeug nach Anspruch 9, **dadurch gekennzeichnet, dass** es einen Himmel umfasst, der mindestens ein Gebläse (PA), die Vernebelungsvorrichtung (DN) und die Verteilungsöffnungen (BDk) der Luftbehandlungsvorrichtung (DT) umfasst.

## Claims

1. A nebulizer device (DN), including i) an enclosure (EN) provided with a main inlet (EL) suitable for supplying it with liquid, at least one secondary inlet (EA1) suitable for supplying it with air, and with M outlets (SG), with M > 1, ii) N nebulizing means (MN), with N ≥ 1, housed in said enclosure (EN) and each suitable for producing very small drops from said liquid so as to deliver them at one at least of said outlets (SG) by means of an entrainment by said supply air, and iii) at least two chambers (Ci) each provided with a main inlet (EA2) suitable for being supplied with a flow of pulsed air that is to be treated and with drops by at least one of the outlets of said enclosure (EN) and suitable to transfer said drops in said flow of pulsed air so as to treat it, and with an outlet suitable to deliver said flow of pulsed and treated air, **characterized in that** each of the chambers (Ci) includes P secondary inlets (EG), with P ≥ 1, each supplied with drops by at least one of the outlets (SG) of said enclosure (EN), while the main inlet (EA2) of these chambers (Ci) is suitable to be supplied with a flow of pulsed air that is to be treated.

2. The device according to claim 1, **characterized in that** each of said nebulizing means (MN) is arranged to produce drops by piezoelectric effect.

3. The device according to one of claims 1 and 2, **characterized in that** the number N is equal to the number M, such that each of said N nebulizing means (MN) is associated with one of said M outlets (SG) of the enclosure (EN).

4. The device according to one of claims 1 to 3, **characterized in that** each of said P secondary inlets (EG) of a chamber (Ci) is associated with one of said M outlets (SG) of the enclosure (EN).

5. The device according to one of claims 1 to 4, **characterized in that** each of said P secondary inlets (EG) of a chamber (Ci) is arranged in the form of a defined duct in a wall partially delimiting this chamber (Ci).

6. The device according to one of claims 1 to 5, **characterized in that** said chambers (Ci) are defined in a single-piece element (EM).

7. The device according to one of claims 1 to 6, **characterized in that** it includes at least one fan (VT) coupled to said enclosure (EN) and suitable for supplying the latter (EN) with supply air.

8. An air treatment device (DT), **characterized in that** it includes i) a pulser (PA) suitable for providing at least a flow of pulsed air that is to be treated at at least one outlet (SFj), ii) a nebulizer device (DN) according to one of the preceding claims and coupled to each outlet (SFj) of said pulser (PA), and iii) diffusion orifices (BDk) coupled respectively to said chambers (Ci) of the nebulizer device (DN) so as to deliver at selected locations each flow of pulsed and treated air originating from one of said chambers (Ci) .

9. A vehicle, **characterized in that** it includes at least one air treatment device (DT) according to claim 8.

10. The vehicle according to claim 9, **characterized in that** it includes a roof comprising at least the pulser (PA), the nebulizer device (DN) and the diffusion orifices (BDk) of said air treatment device (DT).
